(19) Europäisches Patentamt
European Patent Office
Office européen des brevets

(11) **EP 3 644 751 B1**

(12) **EUROPEAN PATENT SPECIFICATION**

(45) Date of publication and mention
of the grant of the patent:
**23.06.2021 Bulletin 2021/25**

(21) Application number: **18726166.4**

(22) Date of filing: **28.05.2018**

(51) Int Cl.:
*A23F 3/06* *(2006.01)*      *A23F 3/08* *(2006.01)*
*A23F 3/12* *(2006.01)*

(86) International application number:
**PCT/EP2018/063909**

(87) International publication number:
**WO 2019/001867 (03.01.2019 Gazette 2019/01)**

(54) **A PROCESS FOR PRODUCING A TEA PRODUCT**

VERFAHREN ZUR HERSTELLUNG EINES TEEPRODUKTS

PROCÉDÉ DE PRODUCTION D'UN PRODUIT DE THÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2017 EP 17177866**

(43) Date of publication of application:
**06.05.2020 Bulletin 2020/19**

(73) Proprietors:
• **Unilever IP Holdings B.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London, Greater London EC4Y 0DY (GB)**
Designated Contracting States:
**CY GB IE MT**

(72) Inventors:
• **BASAVARAJU, Lokesh
Bangalore
Karnataka 560066 (IN)**
• **GOVINDASWAMY, Vadivel
Bangalore
Karnataka 560066 (IN)**
• **GUTTAPADU, Sreeramulu
Bangalore
Karnataka 560066 (IN)**

(74) Representative: **Warner, Guy Jonathan
Unilever N.V.
Unilever Patent Group
Bronland 14
6708 WH Wageningen (NL)**

(56) References cited:
**WO-A1-2013/075912      WO-A1-2014/206883
GB-A- 692 778      US-A1- 2007 071 870**

EP 3 644 751 B1

## Description

### Field of the invention

The present invention relates to a process of producing a tea product. More particularly the present invention relates to a process of producing a black leaf tea product with bright coloured liquor.

### Background of the invention

Tea is one of the most widely consumed beverages in the world. There are several varieties of tea products available e.g. black tea, green tea, oolong tea. Different tea varieties are obtained by following different process starting from the raw tea leaves.

Black tea is believed to be most popular among all available tea varieties. Black tea is characterised by its bright red coloured liquor. In some areas, black tea is also consumed with the addition of milk. Those consumers believed that addition of milk enriches the taste of tea beverages. Therefore, the requirement of bright coloured tea is of prime concern in case of milk tea.

At the same time, another problem associated with tea plant is that, it is known to accumulate high amount of aluminium, which is believed to affect the sensorials of the tea products. Aluminium is also considered to be not beneficial for health if consumed in higher amount.

There is prior art which discloses tea products with enhanced sensorials.

WO 2013/075912 (Unilever) relates to a process for producing a black tea product with enhanced sensorials. It discloses a process of preparation of a tea product comprising the steps of: (a) taking fresh tea leaf; (b) incubating the fresh leaf at a temperature in the range 4°C to 60°C under anaerobic conditions for a period of 4-36 hours; (c) subjecting the incubated leaf to comminution; and (d) fermenting the comminuted leaf by keeping the leaf at a temperature of 15-35°C for 15 minutes to 3hours.

WO 2014/206883 (Unilever) discloses a process of producing a long leaf tea product with black tea characteristics. The process comprises the steps of: (a) incubating fresh tea leaf at a temperature in the range 4 degrees centigrade to 60 degrees centigrade under anaerobic conditions for a period of 4-36 hours; and (b) exposing the leaf at a temperature of 15-35 degrees centigrade for 70 minutes to 4 hours; wherein there is no step of comminution of the tea leaf before incubation and/or before step (b).

US 2007/0071870 (Conopco Inc.) discloses a process for making black or green tea with the floral aroma of oolong tea. The process utilises tumbling to physically wound the leaves to initiate the oolong aromas and does not involve a traditional solar wither step.

GB692778 (Alexander Maurice Hugo) discloses a tea manufacturing process in which fresh leaf is subjected to the stages of withering, bruising, twisting, fermenting, enzyme-killing and drying, or a selected sequence of these stages, while in a single closable rotatable container which can be heated and placed under vacuum or both.

There is also prior art which discloses tea product with reduced aluminium content.

WO 2012/069290 (Unilever) discloses a process for manufacturing tea product. More particularly the present invention relates to a process for preparation of a tea juice. The process comprises expressing juice from fresh tea leaves thereby to produce leaf residue and tea juice, characterized in that an alkaline agent is added to the tea leaves at a mass ratio of 0.001:1 to 0.08: 1 prior to or during the step of expressing the juice. A disclosed, this process minimizes the amount of aluminium in the end product.

A need therefore exists for a brighter tea product with lower aluminium content.

It is therefore an object of the present invention to provide a process to produce a tea product with lower amount of aluminium.

It is another object of the present invention to provide a process to produce a brighter tea product with lower amount of aluminium.

The present inventors while working on this problem have surprisingly found that a process that comprises a step of anaerobic incubation followed by subjecting the incubated leaf to a gyratory motion produces a tea product with bright coloured liquor with lower level of aluminium, thereby satisfying one or more of the above-mentioned objects.

### Summary of the invention

In a first aspect, the present invention provides a process of preparation of a leaf tea product comprising the steps of:

> a. incubating fresh tea leaf at a temperature in the range 4°C to 60°C under anaerobic conditions for a period of 14 to 60 hours; and

b. subjecting the incubated leaf to a gyratory motion.

In a second aspect, the present invention provides a leaf tea product as obtained and/or obtainable by the process of first aspect.

These and other aspects, features and advantages will become apparent to those of ordinary skill in the art from a reading of the following detailed description. For the avoidance of doubt, any feature of one aspect of the present invention may be utilized in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples *per se.* Similarly, all percentages are weight/weight percentages unless otherwise indicated. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Fresh tea leaf" refers to tea leaf, buds and/or stem that have never been dried to a water content of less than 30% by weight, and usually have water content in the range 60 to 90%.

"Fermentation" refers to the oxidative and hydrolytic process that tea undergoes when certain endogenous enzymes and substrates are brought together, e.g. by mechanical disruption of the cells by maceration of the leaves. During this process colourless catechins in the leaves are converted to a complex mixture of yellow and orange to dark-brown polyphenolic substances.

"Black tea" refers to substantially fermented tea. Black tea has different characteristics to green tea. Black tea is more astringent in taste and less bitter than green tea. The redness of black tea liquor is also significantly higher than that of green tea. Black tea also contains higher level of theaflavins.

The present invention provides a process of preparation of a leaf tea product comprising the steps of:

a. incubating fresh tea leaf at a temperature in the range 4°C to 60°C under anaerobic conditions for a period of 14 to 60 hours; and
b. subjecting the incubated leaf to a gyratory motion.

Step (a):

Step (a) includes incubating fresh tea leaf at a temperature in the range 4°C to 60°C under anaerobic conditions for a period of 14 to 60 hours. The term "anaerobic conditions" as used herein means that the gas phase in contact with the leaf has less than 3%, preferably less than 2% and more preferably less than 1% oxygen by volume. It is particularly preferred that the gas phase in contact with the leaf is substantially free of oxygen.

The fresh leaf may be selected as two leaves and a bud, three leaves and a bud, or more than three leaves and a bud. The duration of time between plucking the fresh tea leaf and the incubation is preferably less than 24 hours, more preferably less than 12 hours and most preferably less than 8 hours. However, it is possible that the duration of time between plucking the fresh tea leaf and the incubation is longer than 24 hours if the tea leaf is stored at temperature preferably less than 15°C.

Anaerobic conditions:

The anaerobic conditions are optionally achieved by:

i. placing the fresh tea leaf in a container, and closing the container, or;
ii. placing the tea leaf in a container, purging a gas essentially free of oxygen through the container, and closing the container, or placing the leaf in an airtight chamber or under vacuum.

Preferably, the anaerobic conditions are achieved by:

Placing the fresh tea leaf in a container, and closing the container, or;
Placing the tea leaf in a container, purging a gas essentially free of oxygen through the container, and closing the container.

By placing the fresh leaf in a container and closing the container, the oxygen concentration in the gas phase decreases with time and anaerobic conditions are achieved after keeping the container closed for a certain amount of time. The container is closed for a duration of preferably greater than about 3 hours, more preferably greater than 4 hours and most preferably greater than about 6 hours or even greater than about 8 hours.

Alternatively and more preferably, the anaerobic conditions are achieved by placing the leaf in a container, purging a gas essentially free of oxygen through the container and closing the container. The gas essentially free of oxygen is preferably nitrogen or carbon dioxide, more preferably nitrogen.

Once the container is closed in step (i) or (ii) above, there is no particular restriction as to the pressure in the container. The pressure inside the closed container is preferably from 1 to 1000 mm Hg absolute, more preferably 10 to 800 mm Hg absolute and most preferably 20 mm Hg.

It is preferred that the moisture loss from the leaf during the step is as low as possible. This is advantageously and conveniently achieved by carrying out this step under closed conditions. The incubated tea leaf after this step comprises water in the range of preferably from 70 to 75% by weight.

Incubation temperature:

Step (a) is at a temperature in the range 4°C to 60°C, preferably in the range 4°C to 55°C, more preferably in the range 10°C to 40°C.

Duration of anaerobic incubation:

The plucked leaf is incubated under anaerobic conditions for a period of 14 to 60 hours, preferably for a period of 16 to 55 hours and most preferably for a period of 18 to 48 hours.

Step (b):

After the incubation step as discussed above the incubated leaf is subjected to a gyratory motion.

A gyratory motion is a motion wherein an object moves in a circular path with respect to a fixed central point. This circular path can be vertical or horizontal. This can be achieved by a gyratory equipment/device.

Gyratory equipment is known for use in mechanical screening, separation, sieving, clarification, etc.

A spinning device preferably provides the gyratory motion for the purpose of the present invention. The most preferred spinning device is a centrifuge.

"Revolution per minute" (rpm) designates the speed of rotation of a spinning device. The rotational speed is contingent on the radius of rotation, which is device dependent. Therefore, protocols typically specify the relative centrifugal force (RCF), rather than specifying a rotational speed. This is generally expressed in multiples of '$g$' (the standard acceleration due to gravity at the Earth's surface). The RCF can be calculated from the rotational speed using the following formula:

$$RCF = 1.12 \times R \times (S/1000)^2$$

Wherein, R is the centrifugal radius (in mm), S is the rotational speed of the centrifuge (in rpm), and RCF is expressed in units of gravity (times gravity or $\times g$).

In case of present invention, the RCF is preferably in the range of 6000 to 14000 $\times g$, more preferably 8000 to 14000 $\times g$ and most preferably 9000 to 12000 $\times g$.

Preferably, there is no step of comminution of tea leaf before step (b).

After the above step it is preferable that the leaf undergoes a step of comminution. This may preferably be carried out by crushing, tearing and curling which is known as CTC. One or more CTC steps may be carried out. In this step, the incubated leaf breaks up and releases enzymes that exist in the leaf.

Alternately, the comminution step may preferably be carried out by rolling the leaf in an orthodox roller or comminuted in a rotorvane or combination thereof. During these steps, precursors present in the tea leaf become amenable to the enzymes.

After comminution, the tea leaf preferably undergoes fermentation. Fermentation is carried out by keeping the leaf at a temperature of 15 to 35°C for 15 minutes to 3 hours. Preferably, the temperature of the fermentation is between 25 to 35°C and more preferably around 30 to 35°C. The time for fermentation preferably is from 30 minutes to 6 hours and more preferably 1 to 5 hours and most preferably 1 to 4 hours. In this stage the leaf undergoes enzymatic reactions which produce the typical black tea characteristics.

The tea leaf may preferably then be dried. During drying step, the tea leaf is dried to moisture content preferably less than 10% by total mass of the tea leaf, more preferably less than 5 % by total mass of the tea leaf, to obtain the leaf tea.

The drying step is preferably carried out by thermal drying, freeze drying or vacuum drying.

Thermal drying is preferably carried out by contacting the leaf with air; with the temperature of air being preferably 50 to 150°C, more preferably 60 to 130°C, most preferably 80 to 120°C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20 to 70°C, more preferably 25 to 60°C and most preferably 30 to 55°C. Vacuum drying may be carried out in any suitable vacuum drier, preferably in a rotary vacuum drier.

Now the invention will be demonstrated in terms of examples. The following examples are just for illustration and in no way limits the scope of the present invention.

**Examples**

Preparation of different tea products:

Example A:

Fresh tea leaves (moisture content 77%) were procured from the tea garden in southern India. These leaves were then withered for 18 hours. After that, the tea leaves were subjected to CTC (cut tear curl) for 4 times to obtain macerated dhool. The macerated dhool was fermented (exposed to air at 25°C) for 90 minutes followed by drying the fermented dhool to a moisture content of less than 5% (130°C in a tray drier for 20 minutes).

Example B:

Fresh tea leaves (moisture content 77%) were procured from the tea garden in Southern India. These leaves were then withered for 18 hours. After that, it was subjected to centrifugation (Beckman Avanti J25 I Centrifuge) at 1000 × g for about 30 minutes. After that, the tea leaves were subjected to CTC (cut tear curl) for 4 times to obtain macerated dhool. The macerated dhool was fermented (exposed to air at 25°C) for 90 minutes followed by drying the fermented dhool to a moisture content of less than 5% (130°C in a tray drier for 20 minutes).

Example C:

Fresh tea leaves (moisture content 77%) were procured from the tea garden in Southern India. These tea leaves were then put in an air-tight aseptic plastic bag, sealed and incubated for 18 hours. After that, the tea leaves were subjected to CTC (cut tear curl) for 4 times to obtain macerated dhool. The macerated dhool was fermented (exposed to air at 25°C) for 90 minutes followed by drying the fermented dhool to a moisture content of less than 5% (130°C in a tray drier for 20 minutes).

Example 1:

Fresh tea leaves (moisture content 77%) were procured from the tea garden in southern India. These tea leaves were then put in an air-tight aseptic plastic bag, sealed and incubated for 18 hours. These tea leaves were subjected to centrifugation (Beckman Avanti J25 I Centrifuge) at 1000 × g for about 30 minutes. After that, the tea leaves were subjected to CTC (cut tear curl) for 4 times to obtain macerated dhool. The macerated dhool was fermented (exposed to air at 25°C) for 90 minutes followed by drying the fermented dhool to a moisture content of less than 5% (130°C in a tray drier for 20 minutes).

To test the brightness and aluminium content of the above samples two tea infusions were prepared by following the protocol as described in the following section.

Tea infusion without milk:

Tea liquor were prepared for all the above tea products by infusing 2 g of leaf tea in 200 mL of freshly boiled water for 2 minutes without stirring and the measurement was done using the protocol described below.

Milk tea was prepared by weighing 2g of tea in to porcelain mug. 200mL of boiled hot water (~100°C) was poured in to the mug and infused for 2 minutes. After that it was stirred two times using a spoon followed by straining the infusion using a cloth strainer. After that 5mL of boiled milk was added to the infusion.

Tea infusion with milk:

The above tea infusions were used to measure the colour and aluminium content by using the methods as described in the next section.

Measurement Methods:

Colour measurement:

Colour (CIE L*a*b* values) was measured using a Hunter lab Ultrascan XE (Model-USXE/UNI version 3.4, Hunterlab Associates Laboratories Inc. Virginia). A halogen cycle lamp was used as the light source. The illuminant used was D65 and the measurements were made at 10°-Observer angle. Measurements were made using a quartz cuvette of 10 mm path length. Tea leaf was filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

For tea liquor the colour was measured in the transmittance mode wherein for milk tea (as it is opaque) the colour was measured using reflectance mode.

Aluminium content measurement:

0.5g of tea leaf of liquid sample was taken in a silica crucible and was kept in a furnace (600°C) for 3 hours for complete ashing of the sample. After that 5 mL of nitric acid was added to the sample and the mixture was heated on a hot plate till the volume of the sample reduced to 2 mL. This was diluted to 25 mL in a volumetric flask using a solution of 3% nitric acid. 10 mL of this is taken for aluminium analysis. Aluminium was analyzed using ICP-AES (Inductively Coupled Plasma - Atomic Emission Spectroscopy) by choosing wavelength of 396.14 nm.

The results of the experiments are summarized below in Table 1.

Table1:

| Example No. | Aluminium content (ppm) | b* value | |
|---|---|---|---|
| | | Tea liquor | Milk tea |
| A | 800 | 60 | 9 |
| B | 800 | 60 | 9 |
| C | 800 | 70 | 9.5 |
| 1 | 400 | 74 | 13 |

From the above table it is evident that tea product made within the scope of the present invention (Example 1) provides much lower aluminium content (50% reduction) with high b* value over the examples (example A, B and C) that are outside the scope of the present invention.

Effect of wither time on the aluminium content and b* value:

Different tea products were prepared with varied withering time under anaerobic condition. Except withering time, all the other conditions were same as example 1.

The aluminium content value and b* value of these products were measured using the protocol as described in the previous section.

The results are summarized below in table 2.

Table 2:

| Example No. | Withering time | Aluminium Content (ppm) | b* value (Milk tea) |
|---|---|---|---|
| D | 0 hrs | 800 | 9 |
| E | 6 hrs | 790 | 9 |
| F | 12 hrs | 700 | 9.1 |
| 2 | 18 hrs | 400 | 14 |
| 3 | 24 hrs | 410 | 14 |
| 4 | 36 hrs | 400 | 14.2 |
| 5 | 48 hrs | 403 | 14.2 |

From the above table, it is clear that the examples (2, 3, 4 and 5) within the scope of the present invention provides much lower aluminium content along with increased b* value. On the other hand, examples (D, E and F) that are outside the scope of the present invention does not provide the required benefit. It is important to note that after a particular duration of withering (e.g. 36 hours) the benefit is flattened.

**Claims**

1. A process of preparation of a leaf tea product comprising the steps of:

   a. incubating fresh tea leaf at a temperature in the range 4°C to 60°C under anaerobic conditions, wherein the gas phase in contact with the tea leaf has less than 3% oxygen by volume, for a period of 14 to 60 hours; and
   b. subjecting the incubated leaf to a gyratory motion.

2. A process as claimed in claim 1 wherein the gyratory motion is provided by a spinning device.

3. A process as claimed in claim 2 wherein the spinning device is a centrifuge.

4. A process as claimed in any one of the preceding claims wherein there is no step of comminution of the tea leaf before step (b).

5. A process as claimed in claim 1 or 2 further comprises a step of comminution of tea leaf after step (b).

6. A process as claimed in claim 5 further comprises a step of fermenting the comminuted tea leaf.

7. A process as claimed in any one of the preceding claims which further comprises the step of drying the tea leaf at a temperature of 50 to 150°C.

8. A process as claimed in any one of the preceding claims wherein the anaerobic conditions are achieved by:

   i. placing the fresh tea leaf in a container, and closing the container, or;
   ii. placing the tea leaf in a container, purging a gas essentially free of oxygen through the container, and closing the container, or placing the leaf in an airtight chamber or under vacuum.

9. A process as claimed in claim 8 wherein the anaerobic conditions are achieved by placing the fresh tea leaf in a container, and closing the container.

**Patentansprüche**

1.  Verfahren zur Herstellung eines Blattteeprodukts, umfassend die folgenden Schritte:

    a. Inkubieren von frischem Teeblatt bei einer Temperatur im Bereich von 4 °C bis 60 °C unter anaeroben Bedingungen, wobei die Gasphase in Kontakt mit dem Teeblatt weniger als 3% Sauerstoff, bezogen auf das Volumen, aufweist, für einen Zeitraum von 14 bis 60 Stunden; und
    b. Unterwerfen des inkubierten Blattes einer Drehbewegung.

2.  Verfahren wie in Anspruch 1 beansprucht, wobei die Drehbewegung durch eine Schleudervorrichtung bereitgestellt wird.

3.  Verfahren wie in Anspruch 2 beansprucht, wobei die Schleudervorrichtung eine Zentrifuge ist.

4.  Verfahren wie in irgendeinem der vorhergehenden Ansprüche beansprucht, wobei es vor Schritt (b) keinen Zerkleinerungsschritt des Teeblatts gibt.

5.  Verfahren wie in Anspruch 1 oder 2 beansprucht, ferner umfassend einen Zerkleinerungsschritt des Teeblatts nach Schritt (b).

6.  Verfahren wie in Anspruch 5 beansprucht, ferner umfassend einen Schritt des Fermentierens des zerkleinerten Teeblatts.

7.  Verfahren wie in irgendeinem der vorhergehenden Ansprüche beansprucht, das ferner den Schritt des Trocknens des Teeblatts bei einer Temperatur von 50 bis 150 °C umfasst.

8.  Verfahren wie in irgendeinem der vorhergehenden Ansprüche beansprucht, wobei die anaeroben Bedingungen erreicht werden durch:

    i. Platzieren des frischen Teeblatts in einen Behälter und Schließen des Behälters oder;
    ii. Platzieren des Teeblatts in einen Behälter, Spülen eines Gases, das im Wesentlichen frei von Sauerstoff ist, durch den Behälter und Schließen des Behälters oder Platzieren des Blattes in eine luftdichte Kammer oder unter Vakuum.

9.  Verfahren wie in Anspruch 8 beansprucht, wobei die anaeroben Bedingungen erreicht werden, indem das frische Teeblatt in einen Behälter platziert und der Behälter geschlossen wird.


**Revendications**

1.  Procédé de préparation d'un produit de thé en feuilles comprenant les étapes consistant à :

    a. incuber une feuille de thé fraîche à une température dans l'intervalle de 4°C à 60°C dans des conditions anaérobies, dans lequel la phase gazeuse en contact avec la feuille de thé présente moins de 3 % d'oxygène en volume, sur une période de 14 à 60 heures ; et
    b. soumettre la feuille incubée à un mouvement giratoire.

2.  Procédé selon la revendication 1, dans lequel le mouvement giratoire est fourni par un dispositif centrifuge.

3.  Procédé selon la revendication 2, dans lequel le dispositif centrifuge est une centrifugeuse.

4.  Procédé selon l'une quelconque des revendications précédentes, dans lequel il n'y a pas d'étape de broyage de la feuille de thé avant l'étape (b).

5.  Procédé selon la revendication 1 ou 2 qui comprend de plus une étape de broyage de la feuille de thé après l'étape (b).

6.  Procédé selon la revendication 5 qui comprend de plus une étape de fermentation de la feuille de thé broyée.

**7.** Procédé selon l'une quelconque des revendications précédentes qui comprend de plus l'étape de séchage de la feuille de thé à une température de 50 à 150°C.

**8.** Procédé selon l'une quelconque des revendications précédentes, dans lequel les conditions anaérobies sont réalisées par :

> i. disposition de la feuille de thé fraîche dans un récipient, et fermeture du récipient, ou ;
> ii. disposition de la feuille de thé dans un récipient, purge d'un gaz essentiellement exempt d'oxygène à travers le récipient, et fermeture du récipient, ou disposition de la feuille dans une chambre étanche à l'air ou sous vide.

**9.** Procédé selon la revendication 8, dans lequel les conditions anaérobies sont réalisées par disposition de la feuille de thé fraîche dans un récipient, et fermeture du récipient.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013075912 A
- WO 2014206883 A
- US 20070071870 A
- GB 692778 A
- WO 2012069290 A